# EUROPEAN PATENT SPECIFICATION

(11) **EP 0 704 234 B1**
(45) Date of publication and mention of the grant of the patent: **19.05.1999**
(21) Application number: 94115283.7
(22) Date of filing: 28.09.1994
(51) Int. Cl.: B01D 46/24

(54) **Dust removing apparatus**
Apparat zur Entfernung von Staub
Appareil d'enlèvement de poussière

(43) Date of publication of application: 03.04.1996
(73) Proprietor: MITSUBISHI JUKOGYO KABUSHIKI KAISHA, Tokyo 100 (JP)
(72) Inventor: Iwanaga, Atsumasa, c/o Nagasaki Shipyard & Mach., Nagasaki-shi, Nagasaki-ken (JP); Nagashima, Kiyoshi, c/o Nagasaki Shipyard & Mach., Nagasaki-shi, Nagasaki-ken (JP); Ueda, Tetsuya, c/o Nagasaki Shipyard & Machinery, Nagasaki-shi, Nagasaki-ken (JP); Urakata, Hisataka, c/o Nagasaki Shipyard & Mach., Nagasaki-shi, Nagasaki-ken (JP); Fujino, Tetsuya, c/o Nagasaki Shipyard & Machinery, Nagasaki-shi, Nagasaki-ken (JP)
(74) Representative: Henkel, Feiler, Hänzel

(56) References cited:
- EP-A- 0 124 863
- WO-A-91/00769
- FR-A- 2 426 228

## Description

### BACKGROUND OF THE INVENTION:

### 1. Field of the Invention:

The present invention relates to a dust removing apparatus for a dust-containing gas exhausted from a combustion equipment making use of fossil fuel such as coal, an iron manufacturing plant, a cement plant, a chemical plant and the like.

### 2. Description of the Prior Art:

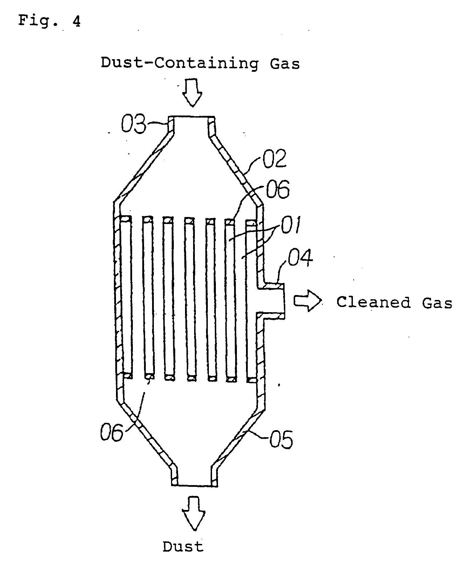

One example of a dust removing apparatus for removing dust in a high-temperature gas in the prior art is shown in vertical cross-section in Fig. 4. In this heretofore known dust removing apparatus a plurality of porous ceramics tubes 01 are arrayed along the direction of a dust-containing gas within a casing 02 disposed nearly vertically. The dust-containing gas having flowed into the casing 02 through a dust-containing gas inlet 03 at the top of this casing 02 flows into the respective porous ceramics tubes 01 and has its dust removed during the process of passing through the tube walls from the inside to the outside, and then it becomes a cleaned gas and flows out through a cleaned gas outlet 04. On the other hand, the dust removed from the dust-containing gas is led to a dust hopper 05 at the bottom of the casing 02 and is exhausted therefrom. It is to be noted that the top and bottom ends of the respective porous ceramics tubes 01 are respectively supported by header plates (partition plates) 06.

In the above-described heretofore known dust removing apparatus shown in Fig. 4, since there exists a possibility that dust may adhere to and accumulate on the inner tube surfaces of the ceramics tubes 01 performing the filtering action, provision is made such that by intermittently ejecting a high-pressure backwashing air from the cleaned gas side, that is, from the outer circumference side of the ceramics tubes 01, the adhered dust is made to peel off from the inner surface and to fall down.

However, the above-described dust removing apparatus involved a problem that if the backwashing is effected simultaneously over the entire region as described above, a disturbance would be applied to the downstream side making use of the cleaned gas due to its pressure variation or a temperature variation, also dust peeled off from the entire object of the backwashing would soar in the region of the dust-containing gas, and hence a proportion of being readsorbed in the next filtering process becomes large.

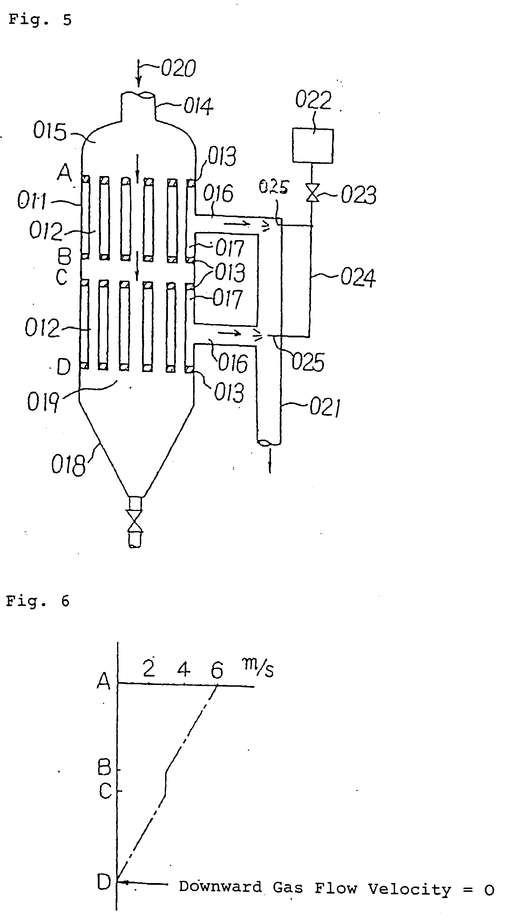

Another example of a dust removing apparatus for removing dust in a high-temperature gas by making use of porous ceramics tubes in the prior art is shown in cross-section in Fig. 5. In this dust removing apparatus, within a casing 011 are disposed a plurality of porous ceramics tubes 012 of both-end open type nearly vertically in two, upper and lower stages, and their upper and lower ends are supported respectively by header plates 013. The inside of the casing 011 is partitioned into an upper space 015 communicating with a dust containing gas inlet 014 at the top, a central space 017 communicating with a cleaned gas outlet 016 in the middle portion, and a lower space 019 communicating with a dust hopper 018 at the bottom. A dust-containing gas 020 such as a boiler combustion gas or the like has its dust removed during the process of passing through the respective ceramic tubes 012 from their inside to their outside, and flows through the respective cleaned gas outlet pipes 016 to a cleaned gas pipe 021.

In addition, provision is made such that in order to remove the dust adhered to the ceramics tubes 012, a backwashing high-pressure air is intermittently fed from a compressed air source 022 through a backwashing valve 023 and air pipes 024 and is then ejected from nozzles 025 through the respective cleaned gas outlet pipes 016 to the central space 017 of the casing 011.

In this heretofore known dust removing apparatus shown in Fig. 5, however, because of the fact that the plurality of ceramics tubes 012 are composed of only both-end open type tubes and a cleaned gas having dust removed therefrom is extracted in the horizontal directions through the ceramics tube walls, at the lowermost portion D (the outlet) of the respective ceramics tubes, a downward gas flow velocity becomes zero as shown in Fig. 6 (the ordinate positions A - D corresponds to the levels A - D in Fig. 5), hence dust peeled off from the upper portions of the ceramics tubes and falling down would stagnate there, and exhaust of the, dust to an ash treatment system (not shown) positioned downstream of the dust hopper 018 would become difficult. And in an extreme case, blocking of the ceramics tubes by the dust would be feared. Furthermore, if abnormal combustion should occur in a boiler or the like in the upper stream, at the time of feeding a backwashing air, occurrence of after-burning phenomena would be feared.

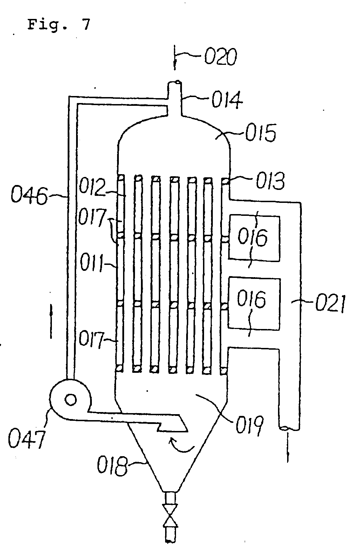

Therefore, as one example of a dust removing apparatus in the prior art which resolved the above-described problems in the prior art, an apparatus disclosed in JP-A-3024251 (EP-A-0124863) is known. This dust removing apparatus in the prior art is shown in Fig. 7, in which in order to insure a gas flow velocity at the lowermost portions of the respective ceramics tubes 012, a dust-containing gas circulating line 046 extending from the lower space in the casing 011 up to the upper space 015 is provided and a circulating pump 047 is equipped in this line. It is to be noted that in Fig. 7, identical component parts to those shown in Fig. 5 are given like reference numerals and further explanation thereof will be omitted.

However, the heretofore known dust removing apparatus shown in Fig. 7 still involves the following problem. That is, a circulating pump which can withstand a high-temperature gas at as high as 850°C does not exist at the present and is difficult to be made practical. And even if it could be made practical, an efficiency of the dust removing apparatus itself would be lowered by circulating the gas.

Another prior art dust removing apparatus is described in FR-A-24 26 228. This apparatus is of the candle type wherein the flow direction of the dust-containing gas is opposite to the falling direction of the dust. The interior of the casing is divided into 4 chambers by diametrical flat partition plates.

### SUMMARY OF THE INVENTION

The present invention has been worked out in order to resolve the above mentioned problems involved by the dust removing apparatus in the prior art. It is the object of the present invention to provide an improved dust removing apparatus, which does not apply disturbances due to pressure variations or temperature variations to the downstream side making use of a cleaned gas, and which is improved with respect to it's dust removing efficiency and which provides for a continuous production of cleaned gas.

According to the present invention there is provided a dust removing apparatus comprising a casing disposed vertically and having its top connected to a dust-containing gas inlet and its bottom connected to a dust hopper; a plurality of porous ceramics filter elements in the form of tubes with both ends of the filter elements being open, said filter elements being vertically provided within said casing and being supported by a top header plate and a bottom header plate, wherein said filter elements can be intermittently backwashed with backwashing air; wherein said casing is divided into a plurality of cleaned gas chambers and filter element groups by at least one inner cylinder partition wall which is (are) concentric to said casing; wherein each of said respective divided cleaned gas chambers is connected to a common cleaned gas main pipe respectively through an independent outlet pipe; and wherein a backwashing device for each of said filter element groups is provided just in front of the joining point of each of said outlet pipes with said cleaned gas main pipe so that each filter element group can be backwashed independently from the other filter element groups.

According to a preferred embodiment of the invention at least either one of an operating time zone and an operating frequency of the backwashing devices for the respective filter element groups can be made different.

According to the present invention, owing to the fact that the cleaned gas chamber is divided into a plurality of chambers respectively having filter element groups and the respective divided chambers are connected to a cleaned gas main pipe through independent outlet pipes which are provided with backwashing devices just in front of the joining points with the cleaned gas main pipe, the filter element groups in the respective chambers can be backwashed independently, hence it is possible to effect dust removal (filtering) in one chamber and to simultaneously perform backwashing in another chamber, thus variations of a pressure and a temperature of a cleaned gas can be greatly reduced, and soaring of dust in the dust-containing gas region can be prevented.

According to a preferred embodiment of the present invention, since at least one of an operating time zone and an operating frequency of the above-mentioned backwashing devices is made different, variations of a pressure and a temperature of a cleaned gas and soaring of dust in the dust-containing gas region can be more effectively reduced and prevented.

The above-mentioned and other objects, features and advantages of the present invention will become more apparent by reference to the following description of preferred embodiments of the present invention taken in conjunction with the accompanying drawings.

### BRIEF DESCRIPTION OF THE DRAWINGS:

In the accompanying drawings:
Fig. 1 is a general vertical cross-section view of a preferred embodiment of the present invention;
Fig. 2 is a horizontal cross-section view taken along line A-A in Fig. 1 as viewed in the direction of arrows;
Fig. 3 is a detailed cross-section view of an essential part of the same preferred embodiment;
Fig. 4 is a vertical cross-section view showing one example of a dust removing apparatus in the prior art;
Fig. 5 is a vertical cross-section view showing another example of a dust removing apparatus in the prior art;
Fig. 6 is a diagram showing a distribution of a gas flow velocity within a ceramics tube in the dust removing apparatus shown in Fig. 5; and
Fig. 7 is a vertical cross-section view showing still another example of a dust removing apparatus in the prior art.

### DESCRIPTION OF THE PREFERRED EMBODIMENTS:

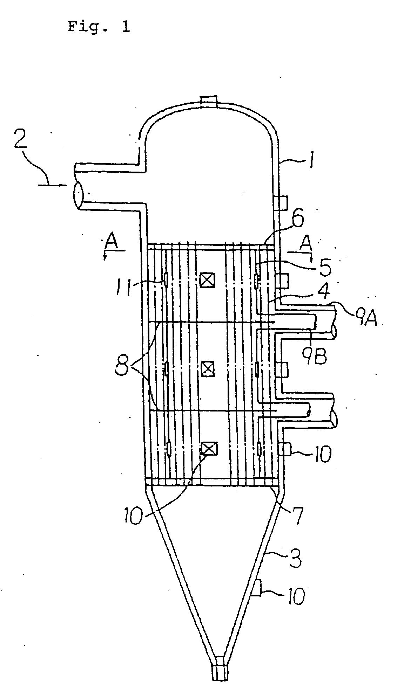

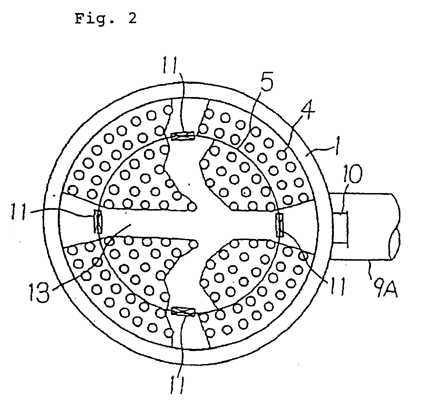

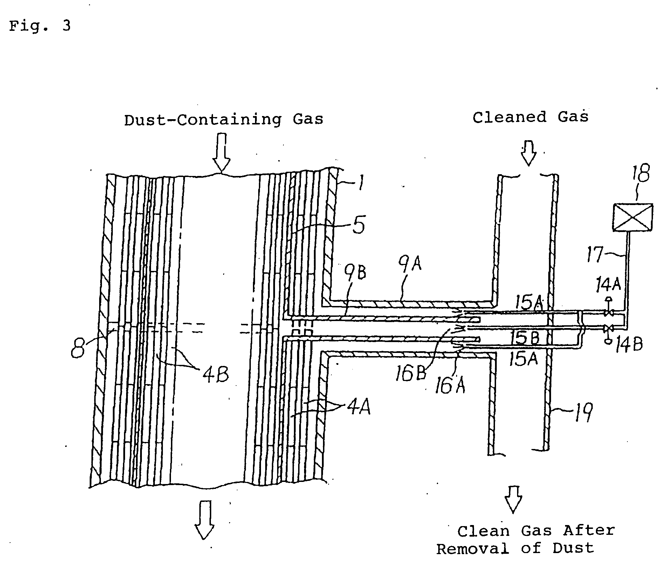

Now, a preferred embodiment of the present invention will be described with reference to Figs. 1 to 3. In this preferred embodiment, as shown in Fig. 1, a single filter block section composed of a plurality of filter elements each consisting of a cylindrical porous ceramics body is provided within a casing 1 disposed nearly vertically, having a dust-containing gas inlet 2 at the top and having a dust hopper 3 connected to the bottom. In this block section are present a plurality of porous ceramics cylindrical filter elements 4 fixed to or gripped by a top header plate 6, a bottom header plate 7 and two intermediate header plates 8, and an inner cylinder partition wall 5 of cylindrical shape. As shown in Fig. 3, the inner cylinder partition wall 5 separates the plurality of filter elements 4 into two tube groups consisting of a group of outside filter elements 4A and a group of inside filter elements 4B. At the same time, the inner cylinder partition wall 5 also divides the cleaned gas chamber on the secondary side of the filter elements 4 constructed outside of the filter elements 4 by the top header plate 6, the bottom header plate 7, the intermediate header plates 8 and the casing 1, into two chambers.

Two cleaned gas outlet pipes 9A opening in the side wall of the casing 1 are provided at the positions of the same levels as the above-described two intermediate header plates 8, these cleaned gas outlet pipes 9A are connected to a cleaned gas main pipe 19 (Fig. 3) outside of the casing 1, and the cleaned gas chamber formed outside of the inner cylinder partition wall 5 is connected to the cleaned gas main pipe 19 through these cleaned gas outlet pipes 9A. Also, cleaned gas outlet pipes 9B opening in the inner cylinder partition wall 5 are provided within the above-described respective cleaned gas outlet pipes 9A in a concentric manner, these cleaned gas outlet pipes 9B are connected to the cleaned gas main pipe 19, and the cleaned gas chamber formed inside of the inner cylinder partition wall 5 is connected to the cleaned gas main pipe 19 through these cleaned gas outlet pipes 9B. As described above, the cleaned gas outlet pipes 9A and 9B for leading the respective ones of the divided cleaned gas chamber to the cleaned gas main pipe 19 are constructed as concentric double pipes, and until they are connected to the cleaned gas main pipe 19, they are kept independent of each other.

As best seen in Fig. 3, at the positions just before being connected to the cleaned gas main pipe 19, backwashing devices 15A for the outer pipe group and backwashing devices 15B for the inner pipe group are equipped within the cleaned gas outlet pipes 9A and the cleaned gas outlet pipes 9B, respectively. In these backwashing devices 15A and 15B are respectively provided backwashing control valves 14A and 14B and backwashing nozzles 16A and 16B, and the arrangement is such that backwashing air may be fed from a common high-pressure air source 18 through an air pipe 17.

It is to be noted that reference numeral 10 designates manholes provided in the casing 1 and the dust hopper 3, numeral 11 designates manholes provided in the inner cylinder partition wall 5, the filter elements 4 are not arrayed over an appropriate width in the diametrical direction or the like directed from the manholes 11 to the cleaned gas outlet 9B, and walking passages 13 are formed at these portions of the intermediate header plates 8 and the bottom header plate 7.

In the illustrated embodiment, a dust-containing gas flowed into the casing 1 through the dust-containing gas inlet 2 enters in the filter elements 4, while it is flowing through the filter element tubes 4 from their inside to their outside, dust is removed, then the filtered cleaned gas is accommodated in the respective cleaned gas chambers divided by the inner cylinder partition wall 5, these cleaned gases would flow through the cleaned gas outlet pipes 9A and 9B, respectively, into the common cleaned gas main pipe 19, and they are fed to an instrument on the downstream side. On the other hand, dust seized by the respective filter elements 4 would fall and would be accommodated in the dust hopper 3.

In addition, by actuating the respective backwashing devices 15A and 15B for the cleaned gas outlet pipes 9A and 9B and ejecting backwashing air from their backwashing nozzles 16A and 16B, backwashings of the above-described outside filter elements 4A and the above-described inside filter elements 4B are effected independently of each other.

In the above-described preferred embodiment, owing to the fact that the cleaned gas chamber is divided into two chambers by the inner cylinder partition wall 5 and that the divided cleaned gas chambers can be independently backwashed by means of the backwashing devices 15A and 15B provided just before the joining points of the independent cleaned gas outlet pipes 9A and 9B with the cleaned gas main pipe 19, variations of a pressure and a temperature of a cleaned gas can be greatly reduced by actuating the backwashing devices 15A and 15B after their operating time zones and operating frequencies have been appropriately preset so that dust removal may be carried out in one cleaned gas chamber while backwashing may be performed in the other cleaned gas chamber. Also, by carrying out dust removal in one cleaned gas chamber, even if backwashing is performed in the other cleaned gas chamber, behavior of dust on the side of the dust-containing gas can be made settled.

Furthermore, in the case where in place of the single filter block section in the above-described preferred embodiment, a plurality of filter block sections of primary, secondary and other sections are provided, or in the case where the cleaned gas chamber divided into two chambers in the preferred embodiment is divided into three or more chambers, variations of a pressure and a temperature of cleaned gas can be further reduced, and on the side of the dust-containing gas behavior of the dust can be further-stabilized.

As will be apparent from the detailed description of the preferred embodiments of the present invention above, according to the present invention as particularly specified by the appended Claims 1 and 2, as a result of the fact that a filter element group in a filter block section composed of a plurality of porous ceramics filter elements is grouped into a plurality of groups to divide a cleaned gas chamber into a plurality of cleaned gas chambers and it is made possible to carry out delivery of the cleaned gases in the respective divided cleaned gas chambers independently, and that operating time zones and operating frequencies of backwashing devices for the filter elements in the respective cleaned gas chambers are made different, disturbances applied to instruments in the downstream by variations of a pressure and a temperature of cleaned gases relevant to backwashing which were problems in the prior art, can be minimized, and also there is an advantage that redeposition of dust caused by simultaneous backwashing of all the filter elements can be greatly improved.

## Claims

1. A dust removing apparatus comprising:
a casing (1) disposed vertically and having its top connected to a dust-containing gas inlet (2) and its bottom connected to a dust hopper (3);
a plurality of porous ceramics filter elements (4) in the form of tubes with both ends of the filter elements (4) being open, said filter elements (4) being vertically provided within said casing (1) and being supported by a top header plate (6) and a bottom header plate (7), wherein said filter elements (4) can be intermittently backwashed with backwashing air;
wherein said casing (1) is divided into a plurality of cleaned gas chambers and filter element groups (4A,4B) by at least one inner cylinder partition wall (5) which is (are) concentric to said casing (1);
wherein each of said respective divided cleaned gas chambers is connected to a common cleaned gas main pipe (19) respectively through an independent outlet pipe (9A,9B,); and
wherein a backwashing device (15A,15B) for each of said filter element groups (4A,4B) is provided just in front of the joining point of each of said outlet pipes (9a,9B) with said cleaned gas main pipe (19) so that each filter element group (4A,4B) can be backwashed independently from the other filter element groups.

2. The dust removing apparatus according to claim 1, characterized in that at least either one of an operating time zone and an operating frequency of the backwashing devices (15A,15B) for the respective filter element groups can be made different.

## Patentansprüche

1. Staubbeseitigungsvorrichtung, umfassend:
ein vertikal angeordnetes Gehäuse (1), dessen Oberteil mit einem Einlaß (2) für staubbeladenes Gas und dessen Unterteil mit einem Staubtrichter (3) verbunden ist,
eine Mehrzahl poröser Keramikfilterelemente (4) in Form von Rohren, wobei beide Enden der Filterelemente (4) offen sind, die Filterelemente (4) vertikal innerhalb des Gehäuses (1) angeordnet und durch eine obere Sammler- bzw. Kopfstück-Platte (6) sowie eine untere Sammler- bzw. Kopfstück-Platte (7) gehaltert sind, und die Filterelemente (4) intermittierend mit Rückspülluft rückgespült werden können,
wobei das Gehäuse (1) in eine Mehrzahl von Kammern für gereinigtes Gas und in Filterelementgruppen (4A,4B) durch mindestens eine Innenzylinder-Trennwand (5), die konzentrisch zum Gehäuse (1) ist (sind), unterteilt ist,
wobei jede der unterteilten Kammern für gereinigtes Gas jeweils durch ein unabhängiges Auslaßrohr (9A,9B) mit einem gemeinsamen Hauptrohr (19) für gereinigtes Gas verbunden ist, und
wobei eine Rückspüleinrichtung (15A,15B) für jede der Filterelementgruppen (4A,4B) unmittelbar vor dem Verbindungspunkt jedes der Auslaßrohre (9A,9B) mit dem Hauptrohr (19) für gereinigtes Gas vorgesehen ist, so daß jede Filterelementgruppe (4A,4B) unabhängig von den anderen Filterelementgruppen rückgespült werden kann.

2. Staubbeseitigungsvorrichtung nach Anspruch 1, dadurch gekennzeichnet, daß mindestens jeweils Betriebszeitzone und/oder Betriebsfrequenz der Rückspüleinrichtungen (15A,15B) für die betreffenden Filterelementgruppen unterschiedlich eingestellt werden können.

## Revendications

1. Dispositif d'élimination de poussière comportant :
un boitier (1) disposé verticalement et ayant sa partie supérieure reliée à une entrée (2) de gaz contenant de la poussière et sa partie de fond reliée à une trémie (3) à poussière ;
une pluralité d'éléments (4) poreux en céramique formant filtres sous la forme de tubes, les deux extrémités des éléments (4) formant filtres étant ouvertes, les éléments (4) formant filtres étant disposés verticalement à l'intérieur du boîtier (1) et étant supportés par une plaque (6) d'en-tête supérieure et une plaque (7) d'en-tête inférieure, les éléments (4) formant filtres pouvant être lavés de manière intermittente à contre-courant par de l'air à contre-courant ;
le boîtier (1) étant divisé en une pluralité de chambres à gaz nettoyées et de groupes (4A, 4B) d'éléments formant filtres par au moins une cloison (5) de séparation cylindrique intérieure qui est ou sont concentrique(s) au boîtier (1) ;
chacune des chambres à gaz nettoyées divisées étant reliées à un tuyau (19) principal commun de gaz nettoyé par l'intermédiaire respectivement d'un tuyau (9A, 9B) de sortie indépendant ; et
un dispositif (15A, 15B) de lavage à contre-courant pour chacun des groupes (4A, 4B) d'éléments formant filtres étant disposé juste en face du point de jonction de chacun des tuyaux (9A, 9B) de sortie avec le tuyau (19) principal de gaz nettoyé, de sorte que chaque groupe (4A, 4B) d'éléments formant filtres peut être lavé à contre-courant indépendamment des autres groupes d'éléments formant filtres.

2. Dispositif d'élimination de poussière suivant la revendication 1, caractérisé en ce qu'au moins l'une ou l'autre d'une zone temporelle de fonctionnement et d'une fréquence de fonctionnement des dispositifs (15A, 15B) de lavage à contre-courant pour les groupes d'éléments formant filtres respectifs peut être modifiée.
